# EUROPEAN PATENT APPLICATION

(11) **EP 2 071 936 A1**
(43) Date of publication of application: **24.06.2009**
(21) Application number: 07123888.5
(22) Date of filing: 21.12.2007
(51) Int. Cl.: A01G 3/00, B02C 18/08, B02C 18/16, H01H 3/16

(54) **Interlock devices**

(71) Applicant: ROBERT BOSCH GMBH, 70442 Stuttgart (DE)
(72) Inventor: Beadman, Robert, Stowmarket, Suffolk, IP14 2AU (GB); Simpson, Peter, Lower Cambourne, Cambridgeshire, CB3 6EX (GB); Kocsis, Timea, Lower Cambourne, Cambridgeshire, CB3 6EX (GB); Fowles, Andrew, Colchester Essex CO4 3FG (GB); Heywood, Peter, Norton, IP31 3LE (GB)

(57) **Abstract**

The present invention relates to interlock devices, in particular to an interlock device for an apparatus having at partially an electrical operation and which requires, for safety reasons, two or more components to be in contact prior to operation of the apparatus. We describe an interlock arrangement which comprises an electric switch (30) on a first of said two components, the switch being actuatable between an electrically open position and an electrically closed position by means of pivoting or rocking action; and an actuating element (21) having at least one switch-actuating surface (25) and two actuating contacts (22,23). A second of said two components has at least one actuating element engagement surface (24) adapted to contact a first of said actuating contacts (22) when the two components are brought into an operative configuration, said first actuating contact (22) moving to cause a first of said switch-actuating surfaces (25) to bear against the switch (30) and move said switch into the electrically closed position. Said actuating element engagement surface (24) is also adapted to contact a second of said actuating contacts (23) upon separation of the two components from the operative configuration such that the second of said switch-actuating surfaces is caused to bear against the switch to move said switch into the electrically open position.

## Description

The present invention relates to interlock devices. In particular, it relates to an interlock device for an apparatus having at least partially an electrical operation and which requires, for safety reasons, two or more components to be in contact prior to operation of the apparatus. It is an additional requirement of such interlocks that opening of the contacts be a positive mechanical operation without reliance on potentially unreliable means such as spring forces. This ensures additional safety.

In its broadest sense, the present invention provides an interlock assembly for an apparatus comprising at least two components, which components are operatively required to engage or be placed in, around or against each other. The interlock comprises an electric switch provided on a first of said two components the switch being actuatable between an electrically open position and an electrically closed position, preferably by means of a sliding, pivoting or rocking action; and an actuating element having at least one switch-actuating surface and two actuating contacts. The interlock further comprises providing a second of said two components with at least one actuating element engagement surface adapted to contact a first of said actuating contacts when the two components are brought into an operative configuration, wherein said first actuating contact moves to cause a first of said switch-actuating surfaces to bear against the switch to move said switch into the electrically closed position; and said actuating element engagement surface is adapted to contact a second of said actuating contacts upon separation of the two components from the operative configuration such that the second of said switch actuating surfaces is caused to bear against the switch to move said switch into the electrically open position.

Suitably, said actuating element is mounted for a rotational movement upon said first component.

Alternatively, said actuating element is mounted for linear or sliding movement over the switch.

Preferably, the actuating element is maintained in the separation position by a spring force when said second component has been removed.

Preferably, the interlock assembly further comprises an electrically detectable identification means. Suitably, the identification means comprises at least one embedded magnet in one of said components and a magnetic sensor or magnetically responsive switch in the other component.

The above and other aspects of the present invention will now be described in further detail, by way of example only, with reference to the accompanying figures, in which:
- Figure 1: is a perspective view of a vegetation shredder incorporating first embodiment of an interlock device in accordance with the present invention;
- Figure 2: is a partial sectional perspective view of the shredder of Figure 1 showing the actuating element and actuating surface of Figure 1 in a first configuration;
- Figure 3: is a corresponding view to that of Figure 2 in a second configuration; and
- Figure 4: is an exploded perspective view showing the actuating element and a rocker switch of the embodiment of Figure 1;
- Figure 5: shows the interaction between the switch, actuating element and actuating surface of the shredder of Figure 1 in the configuration of Figure 2; and
- Figure 6: shows the interaction between the switch, actuating element and actuating surface of the shredder of Figure 1 in the configuration of Figure 3.

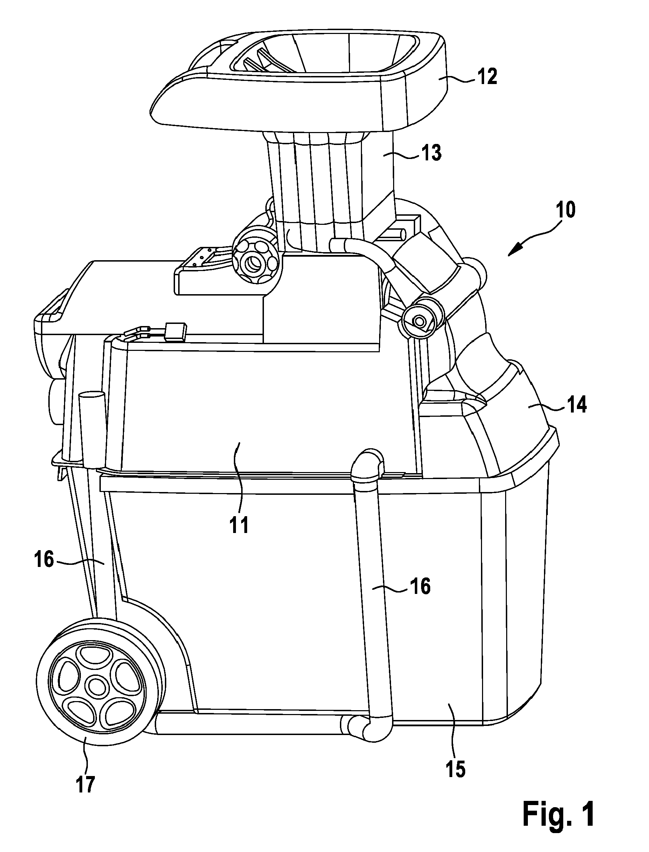

To help illustrate the present invention, we will describe a vegetation shredder which includes the inventive interlock arrangement. The present invention is, however, suitable for use with other apparatus in which two components are required to be placed together for operation. An assembled vegetation shredder is shown in Figure 1 at 10. Vegetation shredders are typically used for shredding garden waste such as branches, twigs or stems of flowers and comprise a housing 11 enclosing a shredder cutter assembly, typically comprising an inclined rotating cutter disc or a generally horizontally-orientated cylindrical shredding or cutting element (not shown). The shredder includes a hopper 12 acting as an inlet to the apparatus through which vegetation is fed by the user and a feed chute 13 which acts to space hopper 12 from the cutter assembly thereby protect users from suffering injury in use. In use, shredder vegetation is ejected from an outlet 14 into a suitable collecting device. In the embodiment shown, the shredder includes an integral collection box bin 15. The shredder housing 11 is supported in an elevated position upon a frame 16, suitably provided with wheels 17 for ease of movement.

Typically, the shredder cutter assembly is operated by means of an electric motor, suitably powered from a mains electricity supply including suitable intermediate switching arrangements to enable user-controlled operation of the motor.

Similar arrangements apply with other apparatus. Alternatively, such apparatus may be powered by means of a small engine, such as a petrol engine. Such apparatus nevertheless include electrical circuits to operate, ultimately to provide a spark to a plug to ignite fuel in a cylinder.

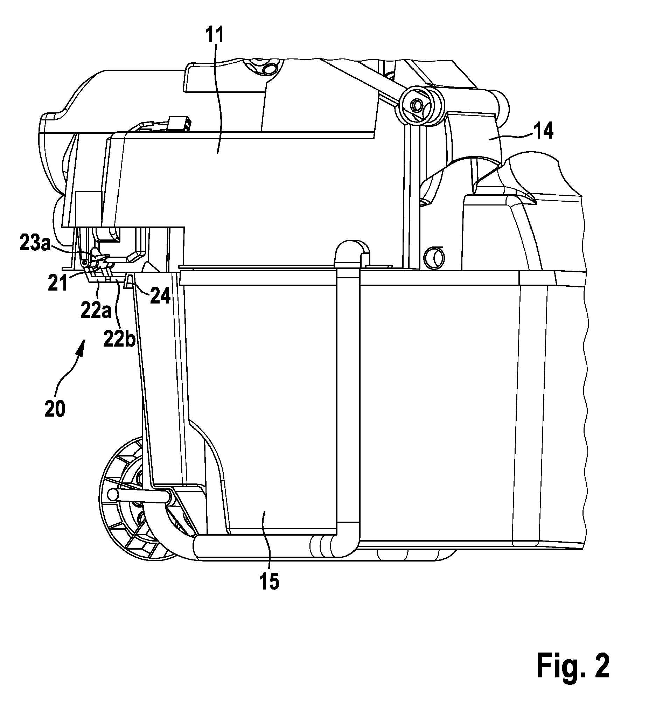

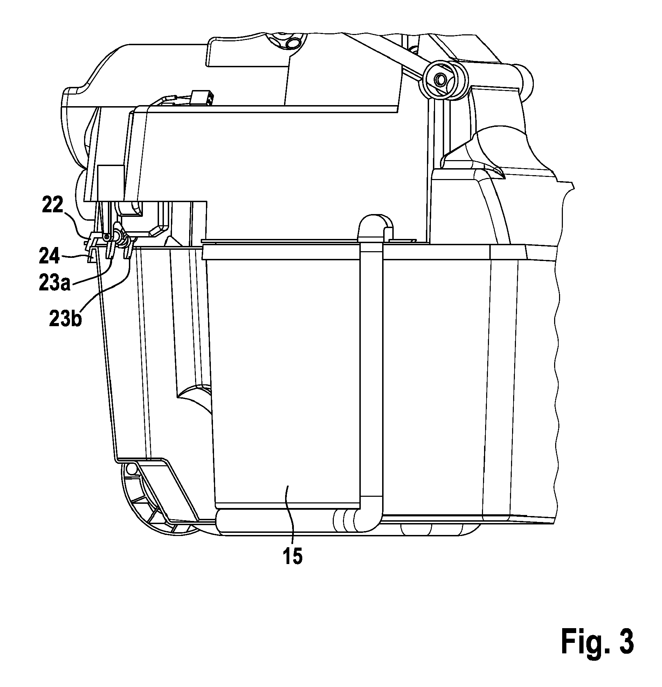

It is desired, in such a shredder, to prevent access to the cutter assembly through the outlet 14 when the apparatus is in use. Accordingly, the shredder includes the inventive interlock assembly to prevent operation of the cutter assembly when the collection bin 15 is not in position, obscuring user access to the outlet 14. This is more clearly explained with respect to Figures 2 and 3.

Figure 2 shows the shredder 10 with the collection bin 15 partially inserted below the cutter housing 11. Located conveniently on the underside of the housing is an interlock switching arrangement 20 comprising a rocker switch (obscured). A rocker switch has an elongate actuating member pivotable about a central point between a position in which electrical contacts in the switch are closed, completing a circuit, and a position in which the electrical contacts are open. Movement of the elongate actuating member between the two positions is achieved by application in turn of a force at each end of the member. The inventive interlock comprises a pivotable actuating element 21 having two actuating contacts 22, 23. In the embodiment shown, each actuating contact includes two fingers 22a, 22b, 23a, 23b to ensure positive engagements, in use, against an engagement or contact surface 24 formed on collection bin 15. In the embodiment shown, engagement surface 24 is defined by an upper edge of a rim formed on collection bin 15.

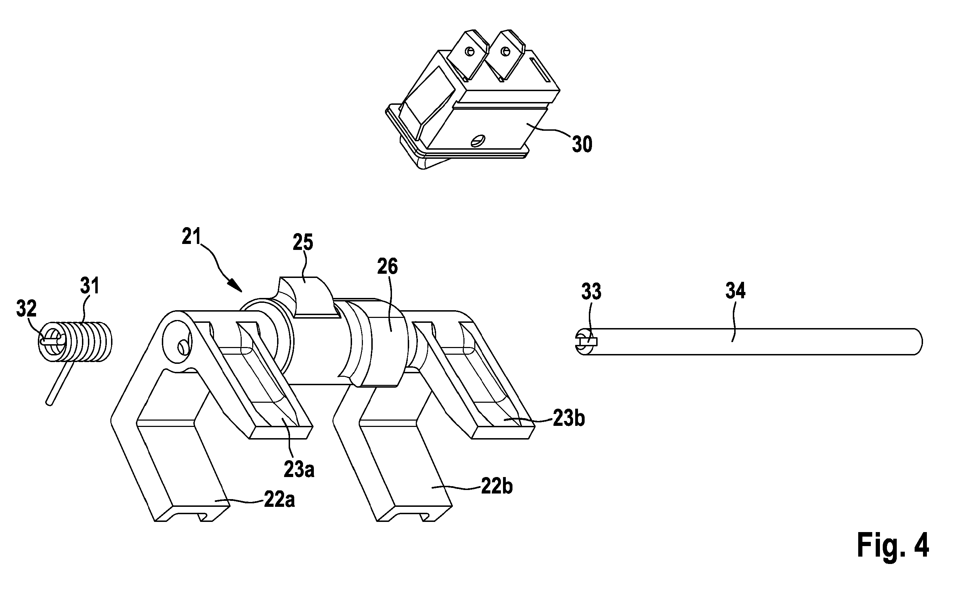

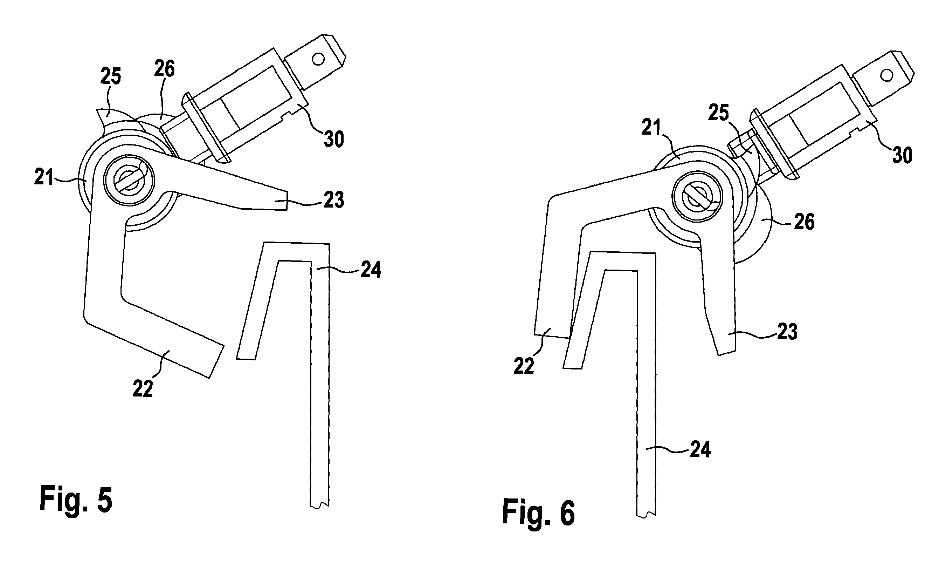

With reference to Figures 4 to 6, it will be observed that actuating element 21 includes two cam surfaces 25, 26 which bear, in use, against respective ends of the rocker switch 30. Comparing the views of Figures 2 and 3 and following the sequence of views in Figures 5 and 6, it will be observed that further insertion of collection bin 15 towards its operative position causes engagement surface 24 of bin 15 to contact first actuating contact 22 of interlock actuating element 21 and thus cause rotation thereof. This, in turn causes the cam surface 25 to bear against the actuating member of rocker switch 30 pushing it into the closed position, completing the electrical circuit. Alternative arrangements involving slidingly or pivotingly-actuated switches will be apparent to the person skilled in the art.

It will also be observed that second actuating contacts 23 are now in close contact with a rear surface of actuating surface 24 of collection bin 15. Upon removal of collection bin 15, actuating surface 24 bears against second actuating contacts 23 causing counter-rotation of pivotable actuating element 21 and thereby causing cam surface 26 to bear against the opposite end of rocker switch elongated actuating member, pushing it positively into the open position, opening the electrical circuit, thereby removing power to the cutter assembly, without reliance on springs or other potentially unreliable means.

A particular advantage of this arrangement is that reliable mechanical opening and closing of the switch is achieved without the need for close guidance or control of the precise height of the rim of the box. The user therefore has only to slide the box under the machine without having to pay attention to locating the box top flange into guides or runners. A height variation of ±5mm can be readily accommodated. As further security against inadvertent operation, in preferred embodiments, the box also incorporates other electrically detectable identification features (for example, embedded magnets detectable by reed switches) with the product control circuitry requiring both the rocker switch and the reed switch to be actuated to enable start up. Furthermore, although the design incorporates positive mechanical opening and closing of the rocker switch, it also preferably includes spring-loaded operation into the 'open' position by means of a spring having a tang 32 which engages a slot 33 formed in an end face of rod 34 on which the actuating member is carried. If, therefore, the pivotable actuating element is inadvertently nudged to the closed position when the box was not present it will automatically return to open rather than remaining closed, thus not interfering with future collection bin insertions. In the event of failure of this spring such that the pivotable actuating element remains in the closed position, full insertion of the box sufficient to actuate the reed switch is prevented by fingers 23a, 23b.

In an alternative embodiment (not shown) the actuating element is mounted for a linear or sliding movement over the rocker switch. In this embodiment, the rocker switch is orientated aligned with the direction of insertion of collection bin 15, that is to say, with its axis about which it rocks orthogonal to that direction of insertion.

In further alternative embodiments (not shown), the actuating member, which may, in certain embodiments, be integral with the bin, has two wedge-shaped actuating surfaces, each aligned with a respective end of switch elongate actuating member. As the collection bin 15 is inserted or removed, wedge surfaces respectively contact the adjacent end of switch actuating member causing the switch to move between electronically open and electrically closed configurations. This approach has the disadvantage of requiring close control of the distance between the rim of bin 15 and the switch with attendant complication to the user every time the bin is refitted to the apparatus. It is therefore non-preferred.

## Claims

1. An interlock assembly for an apparatus comprising at least two components, which components are operatively required to engage or be placed in, around or against each other; wherein the interlock comprises i) an electric switch (30) provided on a first of said two components, the switch being actuatable between an electrically open position and an electrically closed position; ii) an actuating element (21) having at least one switch-actuating surface (25) and two actuating contacts (22,23); wherein a second of said two components is provided with at least one actuating element engagement surface (24) adapted to contact a first of said actuating contacts (22) when the two components are brought into an operative configuration, wherein said first actuating contact (22) moves to cause said switch-actuating surface (25), or a first of said switch-actuating surfaces, to bear against the switch (30) to move said switch into the electrically closed position; and said actuating element engagement surface (24) is adapted to contact a second of said actuating contacts (23) upon separation of the two components from the operative configuration such that the switch actuating surface (25), or a second of said switch-actuating surfaces, is caused to bear against the switch to move said switch into the electrically open position.

2. An interlock assembly as claimed in claim 1 wherein said actuating element is mounted for a rotational movement upon said first component.

3. An interlock assembly as claimed in claim 1 wherein said actuating element is mounted for linear or sliding movement over the switch.

4. An interlock assembly as claimed in claim 2 wherein said actuating element is a pivotable actuating element 21 having two actuating contacts 22, 23.

5. An interlock assembly as claimed in claim 4 wherein each actuating contact includes two fingers 22a, 22b, 23a, 23b.

6. An interlock assembly as claimed in any one of claims 1 to 5 wherein said switch-actuating surface is a cam surface (25).

7. An interlock assembly as claimed in any preceeding claim wherein the actuating element (21) is maintained in a separation configuration by a spring force when said second component has been removed.

8. An interlock assembly as claimed in any preceeding claim further comprising an electrically detectable identification means.

9. An interlock assembly as claimed in claim 8 wherein the electrically detectable identification means comprises at least one embedded magnet mounted on or in said second component and a magnetic sensor or magnetically-response switch associated with each of said at least one embedded magnets on or in said first component.

10. A vegetation shredder (10) comprising a shredder body (11) housing a shredder cutter arrangement and having an inlet (12,13) and an outlet (14) supported in an elevated configuration; and a collection vessel (15); wherein the shredder includes an interlock assembly as claimed in any preceding claim provided between the shredder body (11) and the collection vessel (15).

11. A vegetation shredder (10) as claimed in claim 10 wherein the actuating element engagement surface is defined by an upper rim (24) of collection vessel (15).
